# EUROPEAN PATENT APPLICATION

(11) **EP 4 099 115 A1**
(43) Date of publication of application: **07.12.2022**
(21) Application number: 21747460.0
(22) Date of filing: 13.01.2021
(51) Int. Cl.: G05B 23/02, H02J 13/00, H04Q 9/00

(54) **ELECTRICAL DEVICE, APPARATUS MANAGEMENT SYSTEM, APPARATUS MANAGEMENT METHOD, AND PROGRAM**

(30) Priority: 31.01.2020 JP 2020015867
(71) Applicant: Panasonic Intellectual Property Management Co., Ltd., Osaka-shi, Osaka 540-6207 (JP)
(72) Inventor: NAKADA, Akio, Osaka-shi, Osaka 540-6207 (JP); TABARU, Eisuke, Osaka-shi, Osaka 540-6207 (JP)
(74) Representative: Appelt, Christian W.
(86) International application number: PCT/JP2021/000913
(87) International publication number: WO 2021/153238

(57) **Abstract**

An object of the present disclosure is to provide electrical equipment, an appliance management system, an appliance management method, and a program, all of which reduce the chances of causing inconveniences depending on a communication environment. Electrical equipment (1) includes a housing and serves as power distribution equipment provided on a power supply channel. The electrical equipment (1) further includes an execution unit (12) and a processing unit (13). The execution unit (12) controls and/or monitors an appliance (2) to be electrically connected to the electrical equipment (1). The processing unit (13) performs information processing related to the appliance (2). The execution unit (12) and the processing unit (13) are held by the housing. The execution unit (12) controls and/or monitors the appliance (2) based on a result of the information processing performed by the processing unit (13).

## Description

### Technical Field

The present disclosure generally relates to electrical equipment, an appliance management system, an appliance management method, and a program. More particularly, the present disclosure relates to electrical equipment, an appliance management system, an appliance management method, and a program, all of which are configured or designed to control and/or monitor an appliance.

### Background Art

Patent Literature 1 discloses a management system utilizing the Internet of things (IoT) technology and including a lot of appliances (such as a water heater) and a cloud system for managing those appliances.

In the management system of Patent Literature 1, a maintenance control unit permanently attached to a water heater, for example, has information processing capability for managing the water heater, also has the capability of communicating with a cloud service, and determines whether there are any early signs of failure in the water heater. Specifically, the maintenance control unit constantly transmits, to the cloud service, various pieces of information including: information indicating whether any electric current data with a relatively high value has been generated in an electric current, of which the current value is within a rated current value that is equal to or less than an overcurrent threshold value of the water heater; information about the frequency of occurrence of such electric current data; and information about a pattern of variation in the value of the electric current data. Then, the cloud service analyzes, by its AI function, the cause and effect between such electric current data and generation of an overcurrent, thereby determining whether or not the control board of the water heater shows any early signs of failure.

According to this configuration, communication is established as needed between a device (such as a maintenance control unit) attached to an appliance and the cloud system, which tends to cause inconveniences depending on the communications environment. For example, the communication would often cause latency in processing (e.g., the processing of determining whether there are any early signs of failure). In some cases, a communication failure could even prevent the processing from being performed at all.

### Citation List

### Patent Literature

Patent Literature 1: JP 2018-120505 A

### Summary of Invention

In view of the foregoing background, it is therefore an object of the present disclosure to provide electrical equipment, an appliance management system, an appliance management method, and a program, all of which reduce the chances of causing such inconveniences depending on the communication environment.

Electrical equipment according to an aspect of the present disclosure includes a housing and serves as power distribution equipment provided on a power supply channel. The electrical equipment further includes an execution unit and a processing unit. The execution unit controls and/or monitors an appliance to be electrically connected to the electrical equipment. The processing unit performs information processing related to the appliance. The execution unit and the processing unit are held by the housing. The execution unit controls and/or monitors the appliance based on a result of the information processing performed by the processing unit.

An appliance management system according to another aspect of the present disclosure includes multiple pieces of the electrical equipment described above. Each of the multiple pieces of the electrical equipment further includes a cooperating communications unit held by the housing. The cooperating communications units of the multiple pieces of the electrical equipment may communicate with each other.

An appliance management method according to still another aspect of the present disclosure uses power distribution equipment provided on a power supply channel. The appliance management method includes an execution step and a processing step. The execution step includes making the power distribution equipment control and/or monitor an appliance to be electrically connected to the power distribution equipment. The processing step includes making the power distribution equipment perform information processing related to the appliance. The execution step includes controlling and/or monitoring the appliance based on a result of the information processing in the processing step.

A program according to yet another aspect of the present disclosure is designed to cause one or more processors to perform the appliance management method described above.

### Brief Description of Drawings

FIG. 1 is a schematic representation illustrating a facility to which an appliance management method according to a first embodiment is applied;
FIG. 2 depicts a schematic configuration for an appliance management system according to the first embodiment;
FIG. 3 is a block diagram illustrating a schematic configuration for the appliance management system;
FIG. 4 illustrates how to perform an exemplary appliance management method using the appliance management system;
FIG. 5 is a flowchart showing an exemplary procedure of the appliance management method;
FIG. 6 is a schematic representation illustrating an exemplary sensor system according to the appliance management method; and
FIG. 7 illustrates a schematic configuration for an appliance management system according to a second embodiment.

### Description of Embodiments

### (First embodiment)

### (1) Overview

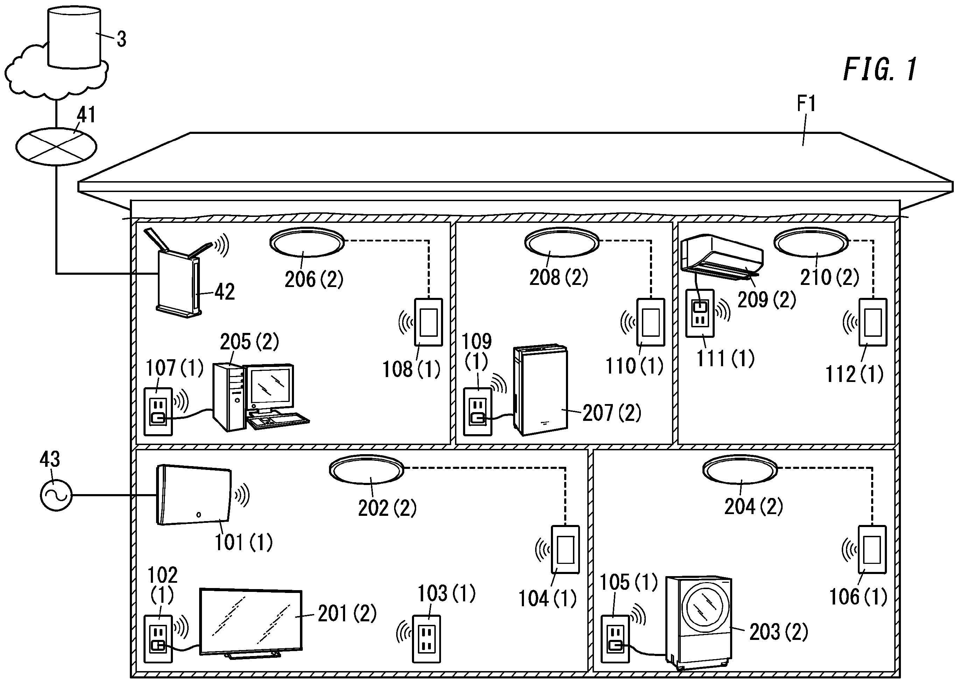

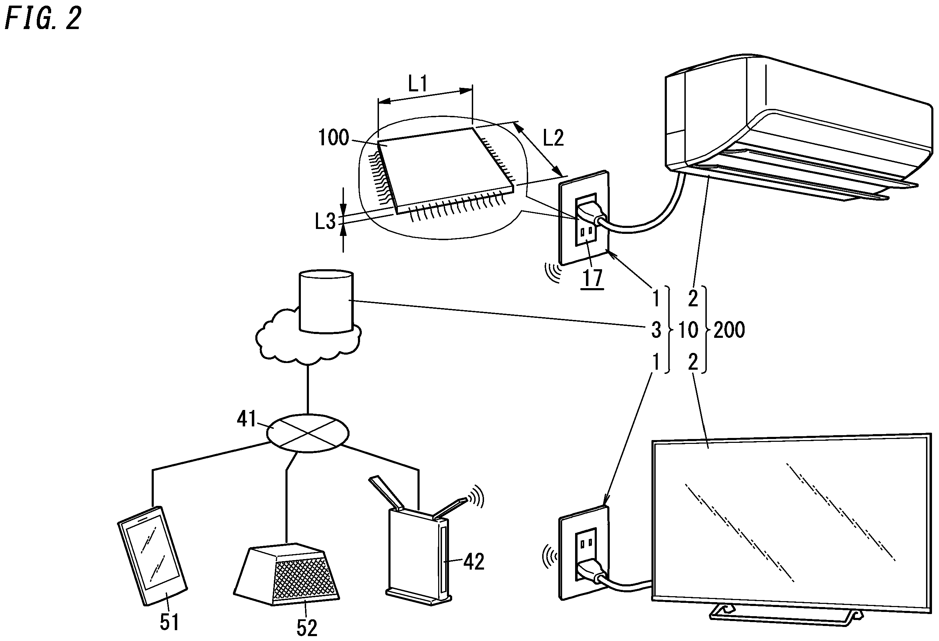

First, an overview of an appliance management method, program, electrical equipment 1, and appliance management system 10 (see FIG. 2) according to an exemplary embodiment will be described with reference to FIG. 1.

An appliance management method according to this embodiment is a method for controlling and/or monitoring an appliance 2. Such an appliance management method may be used, for example, to control and/or monitor an appliance 2 installed in a facility F1. According to this appliance management method, controlling, based on the result of detection by a sensor, for example, the appliance 2 such as turning ON and OFF (i.e., energizing and deenergizing) the appliance 2 allows even an appliance 2 with no sensors to operate in accordance with the result of detection by the sensor, thus enabling the appliance 2 to have an additional function. In addition, this appliance management method also allows, for example, a user (who is a person) who is present inside or outside of the facility F1 to control and/or monitor the appliance 2 by using a mobile communications device 51 such as a smartphone or a tablet computer (see FIG. 2). Thus, the user may manage (i.e., control or monitor) the appliance 2 remotely, for example.

Such an appliance management method could be performed by, for example, connecting each appliance 2 to an external system such as a cloud computing system and making the external system perform information processing for the purpose of controlling and/or monitoring the appliance 2. According to such a system configuration, however, every time the appliance 2 is controlled or monitored, the appliance 2 needs to communicate with the external system. This tends to cause inconveniences depending on the communication environment. For example, the communication would cause latency in controlling and/or monitoring the appliance 2 and/or a communication failure could prevent the appliance 2 from being controlled or monitored.

To overcome such a problem, the appliance management method according to this embodiment adopts the following configuration for electrical equipment 1 that controls and/or monitors the appliance 2. Specifically, electrical equipment 1 according to this embodiment includes a housing 17 (see FIG. 2) and serves as power distribution equipment provided on a power supply channel. The electrical equipment 1 further includes an execution unit 12 and a processing unit 13. The execution unit 12 controls and/or monitors an appliance 2 to be electrically connected to the electrical equipment 1. The processing unit 13 performs information processing related to the appliance 2. The execution unit 12 and the processing unit 13 are held by the housing 17. The execution unit 12 controls and/or monitors the appliance 2 based on a result of the information processing performed by the processing unit 13.

As can be seen, this embodiment allows electrical equipment 1 serving as power distribution equipment to manage (i.e., control and/or monitor) an appliance 2. In addition, information processing required to manage the appliance 2 is also performed by the electrical equipment 1 serving as power distribution equipment. This enables managing the appliance 2 even without involving communication between an external system such as a cloud computing system and the appliance 2. Consequently, this may reduce the chances of causing inconveniences depending on the communication environment. For example, this may reduce the chances of the communication causing latency in controlling and/or monitoring the appliance 2 and/or a communication failure preventing the appliance 2 from being controlled or monitored.

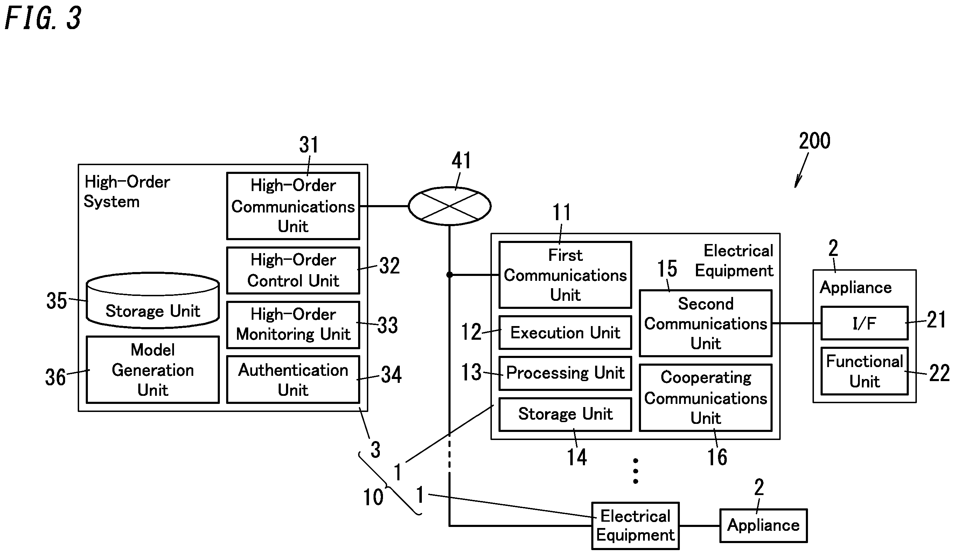

Also, an appliance management system 10 according to this embodiment includes multiple pieces of the electrical equipment 1. Each of the multiple pieces of the electrical equipment 1 is held by a housing 17 and further includes a cooperating communications unit 16 (see FIG. 3). The cooperating communications units 16 of the multiple pieces of the electrical equipment 1 may communicate with each other.

Furthermore, an appliance management method according to this embodiment is a method for managing (i.e., controlling and/or monitoring) an appliance 2 by using the electrical equipment 1. That is to say, the appliance management method according to this embodiment uses power distribution equipment (electrical equipment 1) provided on a power supply channel. The appliance management method includes an execution step and a processing step. The execution step includes making the power distribution equipment (electrical equipment 1) control and/or monitor an appliance 2 to be electrically connected to the power distribution equipment (electrical equipment 1). The processing step includes making the power distribution equipment (electrical equipment 1) perform information processing related to the appliance 2. The execution step includes controlling and/or monitoring the appliance 2 based on a result of the information processing in the processing step.

Also, a program according to this embodiment is a program to implement the appliance management method described above. In other words, a program according to this embodiment is designed to cause one or more processors to perform the appliance management method described above.

### (2) Details

Next, an appliance management method, a program, electrical equipment 1, and an appliance management system 10 according to this embodiment will be described in detail with reference to FIGS. 1-6.

### (2.1) Premise

As used herein, the "management" of the appliance 2 means controlling and/or monitoring the appliance 2. That is to say, the management of the appliance 2 means only controlling the appliance 2, only monitoring the appliance 2, or both controlling and monitoring the appliance 2. The appliance management method according to this embodiment is supposed to include, for example, controlling *and* monitoring the appliance 2 as the management of the appliance 2.

Examples of the "facility" as used herein include non-dwelling facilities such as offices, factories, buildings, stores, schools, and welfare facilities or hospitals, dwelling facilities such as single-family dwelling houses and multi-family dwelling houses, and dwelling units of a single-family dwelling house or a multi-family dwelling house. Examples of the non-dwelling facilities further include theaters, movie theaters, public halls, amusement facilities, complex facilities, restaurants, department stores, hotels, inns, kindergartens, libraries, museums, art museums, underground shopping malls, railway stations, and airports. Furthermore, examples of the "facilities" as used herein further include not only buildings (constructions) but also other types of outdoor facilities such as ballparks, gardens, parking lots, playgrounds, and public parks. In this embodiment, the facility F1 is supposed to be a single-family dwelling house, as an example.

Also, the "power distribution equipment" as used herein refers to various types of electrical equipment (including apparatuses and devices) provided on a power supply channel. For example, the power distribution equipment relays or controls (including controls the ON/OFF states of) the power to be supplied to the appliance 2. The "power" as used herein may be AC power or DC power, whichever is appropriate. The electrical equipment 1 serving as power distribution equipment includes various pieces of equipment fixed (installed) on an installation surface (such as a wall surface, a ceiling surface, or a floor surface) of the facility F1. Examples of the electrical equipment 1 include distribution boards, breakers, wiring devices, EV charging stations, and wiring ducts. As used herein, the "wiring devices" refers to various pieces of equipment to be electrically connected to an electric cable (serving as prewiring) installed behind the walls or behind the ceiling. Examples of the wiring devices include outlets, switches, dimmers, timer switches, sensor switches, and ceiling rosettes. The electrical equipment 1 further includes portable equipment, such as power strips, plugs, and adapters, which are used without being fixed on any installation surface of the facility F1. In this embodiment, the electrical equipment 1 includes a distribution board and an embedded wiring device which are fixed (installed) on an installation surface of the facility F1.

The "appliances" as used herein refer to various types of electrical appliances to be electrically connected to the electrical equipment 1 as power distribution equipment and may operate, for example, with the power supplied from the electrical equipment 1 (power distribution equipment). In other words, the electrical equipment 1 is provided on the channel along which electric power is supplied to the appliances 2. The appliances 2 may be, for example, consumer electronic appliances or installations. Examples of the consumer electronic appliances include TV receivers, lighting fixtures (including ceiling fittings), and video recorders and players (including HDD/DVD recorders and external HDDs). In addition, washing machines, refrigerators, air conditioners, air purifiers, personal computers, smart loudspeakers, and computer game consoles are also counted among the consumer electronic appliances. Examples of the installations include packaged air conditioners (air conditioning equipment), lighting fixtures (including LED fluorescent lamps and spotlights), power storage equipment, kitchen equipment (including induction cookers and dish washers), access control systems, copy machines, and fax machines. In addition, housing installations such as hot water supply systems (including EcoCute^{®}), electric shutters, ventilators, and 24-hour ventilation systems are also counted among the installations. Besides, the appliances 2 further include various types of sensors such as temperature sensors, humidity sensors, illuminance sensors, (barometric) pressure sensors, acceleration sensors, vibration sensors, sound sensors, and odor sensors. In this embodiment, the appliances 2 include, for example, consumer electronic appliances for use in the facility F1.

As used herein, the "user" refers to a person who makes management (which is at least one of control or monitoring) of the appliance 2 and may be an individual person or a juridical person, whichever is appropriate. Alternatively, the "user" may also be a group (or organization) of individual persons or juridical persons. In this embodiment, the user is supposed to be, for example, an individual person who lives in the facility F1.

As used herein, the "remote" location refers to a distant location. For example, the outside of the facility F1 (such as the outside of the premises of the facility F1) is a remote location for the facility F1. That is to say, the appliance management method according to this embodiment allows the user who lives in the facility F1 to manage (i.e., control and/or monitor), using the mobile communications device 51, the appliance 2 in the facility F1, even if the user is currently located outside the premises of the facility F1. Naturally, even if the user is currently located inside the facility F1, he or she may also manage, using the mobile communications device 51, for example, the appliance 2 in the facility F1.

Furthermore, as used herein, if something is "held" by something else, it means that the former is permanently kept by the latter in any form in general, e.g., housed, fixed, supported, or attached. For example, the execution unit 12 and the processing unit 13 held by the housing 17 may be housed (built) in the housing 17 or fixed to the housing 17 to be exposed through one surface (e.g., rear surface) of the housing 17, whichever is appropriate.

### (2.2) Overall system configuration

Next, an overall configuration for a system including an appliance management system 10 as an implementation for performing the appliance management method according to this embodiment will be described with reference to FIGS. 1 and 2.

As described above, the appliance management system 10 includes multiple pieces of the electrical equipment 1. Each of the multiple pieces of the electrical equipment 1 further includes a cooperating communications unit 16 held by the housing 17 (see FIG. 3). The cooperating communications units 16 of the multiple pieces of the electrical equipment 1 may communicate with each other. Thus, the multiple pieces of the electrical equipment 1 included in the appliance management system 10 are configured to be ready to communicate with each other via the cooperating communications units 16. In this embodiment, multiple pieces of the electrical equipment 1 are provided for a single facility F1.

Also, in this embodiment, the multiple pieces of the electrical equipment 1 provided for the single facility F1 and the high-order system 3 together form the appliance management system 10. In other words, the appliance management system 10 according to this embodiment includes the multiple pieces of the electrical equipment 1 and the high-order system 3.

In addition, the appliance management system 10 according to this embodiment and one or more appliances 2 to be managed together form an appliance system 200. Stated otherwise, the appliance system 200 according to this embodiment includes the appliance management system 10 and the one or more appliances 2.

As shown in FIG. 1, multiple pieces of the electrical equipment 1 serving as power distribution equipment are provided for the single facility F1. The multiple pieces of the electrical equipment 1 are arranged to be distributed in a plurality of rooms of the facility F1. In the example illustrated in FIG. 1, one or more pieces of the electrical equipment 1 are installed in each room. In this embodiment, the multiple pieces of the electrical equipment 1 include a distribution board 101 and a plurality of wiring devices 102-112. In this example, among the plurality of wiring devices 102-112, the wiring devices 102, 103, 105, 107, 109, and 111 are supposed to be outlets and the wiring devices 104, 106, 108, 110, and 112 are supposed to be switches as shown in FIG. 1. If there is no need to distinguish the distribution board 101 and the plurality of wiring devices 102-112 from each other, each of the distribution board 101 and the plurality of wiring devices 102-112 will be hereinafter simply referred to as "electrical equipment 1."

The distribution board 101 is electrically connected to a power grid 43. The distribution board 101 may be supplied with, for example, AC power of either 100 V or 200 V at a frequency of either 50 Hz or 60 Hz from the power grid 43. The distribution board 101 includes a main breaker, a plurality of branch breakers, and a cabinet. The main breaker and the plurality of branch breakers are housed in the cabinet. The distribution board 101 is mounted on an installation surface, which is a wall surface of the facility F1. The distribution board 101 distributes the AC power supplied from the power grid 43 to a plurality of branch circuits via the plurality of branch breakers.

Each of the plurality of wiring devices 102-112 is electrically connected to the distribution board 101. In this embodiment, the wiring devices 102-112 are embedded wiring devices to be mounted on an installation surface which is a wall surface of the facility F1. That is to say, the wiring devices 102-112 are configured to be fixed on the installation surface and electrically connectible to an electric cable laid behind the installation surface. In particular, each of these wiring devices 102-112 is an embedded wiring device, of which the housing is fixed onto the installation surface with the housing at least partially embedded in an installation hole provided through the installation surface.

Among the plurality of wiring devices 102-112, the wiring devices 102, 103, 105, 107, 109, and 111, each serving as an outlet, are each configured such that one or more appliances 2 may be electrically connected thereto. That is to say, each of the wiring devices 102, 103, 105, 107, 109, and 111 has multiple pairs of holes. Into each pair of holes, the plug of an appliance 2 may be inserted. Each of the wiring devices 102, 103, 105, 107, 109, and 111 may be electrically connected to the appliance 2, of which the plug is inserted into one of the multiple pairs of holes. The wiring devices 102, 103, 105, 107, 109, and 111 are electrically connected to the distribution board 101. Thus, the wiring devices 102, 103, 105, 107, 109, and 111 provide means for supplying power to the appliances 2 at appropriate locations in the facility F1.

Among the plurality of wiring devices 102-112, the wiring devices 104, 106, 108, 110, and 112, each serving as a switch (e.g., a wall switch), are each inserted between one or more appliances 2 and the distribution board 101. As used herein, "to insert" something means inserting the thing to between two members to be electrically connected to each other. Thus, the wiring devices 104, 106, 108, 110, and 112 are each electrically connected between the distribution board 101 and associated appliance(s) 2. Therefore, the appliance(s) 2 electrically connected to any of the wiring devices 104, 106, 108, 110, and 112 will be electrically connected to the distribution board 101 via the wiring device 104, 106, 108, 110, or 112. This allows each of the wiring devices 104, 106, 108, 110, and 112 to start or stop supplying power from the distribution board 101 to associated appliance(s) 2 by selectively making the distribution board 101 and the appliance(s) 2 electrically conductive or non-conductive with each other.

Thus, in any one of the wiring devices 102-112, each serving as either an outlet or a switch, the power supplied from the power grid 43 and distributed by the distribution board 101 is delivered, via the wiring device 102-112, to the appliance 2 that is electrically connected to the wiring device 102-112. In other words, the wiring devices 102-112 are various pieces of electrical equipment (including apparatuses and devices) which are provided on the channel along which electric power is supplied to the appliances 2. Likewise, the distribution board 101 is also one of those various pieces of electrical equipment (including apparatuses and devices) which are provided on the channel along which the electric power is supplied to the appliances 2. Strictly speaking, the distribution board 101 and at least one of the wiring devices 102-112 are inserted onto the power supply channel between the power grid 43 and each appliance 2.

In addition, each of these pieces of electrical equipment 1 has communication capabilities. As will be described in detail later in the "(2.3) Details of appliance management system" section, a router 42 is installed in this embodiment in the facility F1 and each of the multiple pieces of electrical equipment 1 is configured to be ready to communicate with the router 42. As used herein, "to be ready to communicate" means being able to transmit and receive signals either directly or indirectly via a network or a relay, for example, by an appropriate wired or wireless communication method. In this embodiment, each of the multiple pieces of electrical equipment 1 is ready to communicate bidirectionally with the router 42 by wireless communication. As used herein, the "wireless communication" means communication to be established contactlessly using a radio wave as a transmission medium. Also, in this embodiment, the wireless communication to be established between each of the multiple pieces of electrical equipment 1 and the router 42 is supposed to be wireless communication compliant with, for example, the Wi-Fi^{®} protocol.

Also, in this embodiment, the various appliances 2 installed in the facility F1 are, for example, electrically connected to the plurality of wiring devices 102-112 as shown in FIG. 1. Specifically, the appliances 2 that are connected to the wiring devices 102, 105, 107, 109, and 111, each serving as an outlet, are a TV receiver 201, a washing machine 203, a personal computer 205, an air purifier 207, and an air conditioner 209, respectively. The appliances 2 that are connected to the wiring devices 104, 106, 108, 110, and 112, each serving as a switch, are lighting fixtures 202, 204, 206, 208, and 210, respectively. If there is no need to distinguish the TV receiver 201, the washing machine 203, the personal computer 205, the air purifier 207, the air conditioner 209, and the lighting fixtures 202, 204, 206, 208, and 210 from each other, they will be hereinafter simply referred to as "appliances 2" collectively.

Each of the lighting fixtures 202, 204, 206, 208, and 210 includes a light source such as light-emitting diodes (LEDs) and a lighting circuit for turning the light source ON. The light source turns ON when supplied with power. Thus, the wiring devices 104, 106, 108, 110, and 112 switch the lighting states of the lighting fixtures 202, 204, 206, 208, and 210, respectively, by selectively making the distribution board 101 and the lighting fixtures 202, 204, 206, 208, and 210 electrically conductive or non-conductive with each other. As used herein, the "lighting states" include ON/OFF states.

The high-order system 3 is connected to a public network 41 such as the Internet. The high-order system 3 may be implemented as, for example, a cloud computing system. The router 42 is connected to the public network 41. As described above, each of the multiple pieces of electrical equipment 1 is ready to communicate with the router 42. This makes each of the multiple pieces of electrical equipment 1 connectible to the public network 41 via the router 42. Thus, a communications channel including the public network 41 is established between the high-order system 3 and each of the multiple pieces of electrical equipment 1. Although not illustrated in detail in FIG. 1 and other drawings, the router 42 is not directly connected to the public network 41 but is actually connected to the public network 41 via, for example, an optical network unit (ONU) and a fiber-optic network.

Also, as shown in FIG. 2, a mobile communications device 51 such as a smartphone or a tablet computer, and an operating device 52 such as a smart loudspeaker are connected to the public network 41. Specifically, the mobile communications device 51 may be connected to the public network 41 via a cellular phone network (carrier network) provided by a communications service provider or a public wireless local area network (LAN), for example. Examples of the cellular phone network include the third generation (3G) network, the long-term evolution (LTE) network, the fourth generation network (4G), and the fifth generation network (5G). This allows the mobile communications device 51 to be connected, even when the mobile communications device 51 is currently present in an environment outside of the facility F1, to the public network 41 via the cellular phone network as long as the mobile communications device 51 is connectible in that environment to the cellular phone network.

### (2.3) Details of appliance management system

Next, a detailed configuration for the appliance management system 10 according to this embodiment will be described with reference to FIGS. 2 and 3.

The electrical equipment 1 includes the housing 17, the execution unit 12, and the processing unit 13 as described above. In addition, in this embodiment, the electrical equipment 1 includes not only the housing 17, the execution unit 12, and the processing unit 13 but also a first communications unit 11 (communications unit), a storage unit 14, a second communications unit 15, and a cooperating communications unit 16. The electrical equipment 1 not only includes these constituent elements but also has basic functions as the power distribution equipment, namely, the function as distribution board as for the distribution board 101 and the function as wiring device as for the wiring devices 102-112. Although only one of the multiple pieces of the electrical equipment 1 (including the distribution board 101 and the plurality of wiring devices 102-112) is shown in FIGS. 2 and 3, each of the other pieces of the electrical equipment 1 has the same configuration as the one shown in FIGS. 2 and 3.

The housing 17 forms the shell of the power distribution equipment as shown in FIG. 2. That is to say, the housing 17 houses at least internal components (such as a terminal board constituting a terminal) of the power distribution equipment. In addition, in this embodiment, the housing 17 houses not only those internal components of the power distribution equipment but also the first communications unit 11, the execution unit 12, the processing unit 13, the storage unit 14, the second communications unit 15, and the cooperating communications unit 16 as well. The housing 17 may be made, for example, of a synthetic resin with electrical insulation properties.

In FIG. 2, a wiring device having the function of an outlet is illustrated as an exemplary piece of electrical equipment 1. Thus, the housing 17 has multiple pairs of holes. Into each pair of holes, the plug of an appliance 2 may be inserted. In particular, in this example, an embedded wiring device is illustrated as the electrical equipment 1. The housing 17 is mounted onto an installation surface (such as a wall surface) of the facility F1 with an installation member such as an embedded switchbox. That is to say, the installation surface has an installation hole, through which the housing 17 is mounted onto a mounting member such as a switchbox disposed behind the installation surface (i.e., behind the wall).

Such a housing 17 has dimensions defined by a standard for power distribution equipment. As used herein, the "standard for power distribution equipment" includes various types of standards defined for power distribution equipment by the Institute of Electrical and Electronics Engineers (IEEE) or in respective countries. For example, in the country of Japan, the standard for power distribution equipment includes the Japanese Industrial Standards (JIS), the Interior Wiring Code, or the Interpretation of Technical Standards for Electrical Equipment. In the electrical equipment 1 illustrated in FIG. 2 as an exemplary embedded wiring device, the housing 17 may have dimensions standardized by, for example, the JIS for hexagonal wiring accessories. Such a housing 17 is mounted onto the installation surface with a mounting frame for wiring devices.

The communications unit 11 has the capability of communicating with a high-order communications unit 31 of the high-order system 3. In this embodiment, the first communications unit 11 is housed, and thereby held, by the housing 17. That is to say, the first communications unit 11 is held by the housing and configured to be ready to communicate with the high-order system 3. In this embodiment, the first communications unit 11 may be connected to the public network 41 via the router 42, for example, and may communicate with the high-order system 3 via the public network 41. In this case, the communication method for the electrical equipment 1 may be, for example, wired communication, wireless communication using a radio wave as a transmission medium, or fiber optic communication using light as a transmission medium. Examples of the wired communication include not only a communication method that uses a dedicated communications network as a transmission medium but also a power line communication (PLC) that uses a power line as a transmission medium. Examples of the wireless communication includes various protocols such as Wi-Fi^{®}, Bluetooth^{®}, ZigBee^{®}, and low power radio standards requiring no licenses (such as the Specified Low Power Radio standard).

In this embodiment, the communication protocol adopted by the electrical equipment 1 is either a protocol selected from the group consisting of a wireless multi-hop, Wi-Fi^{®}, Bluetooth^{®}, ZigBee^{®}, Ethernet^{®}, power line communication, and Power over Ethernet (PoE)^{®}, or a combination thereof. As used herein, the "communication protocol adopted by the electrical equipment 1" refers to the communication protocols in general that the electrical equipment 1 may use to communicate with other devices. Thus, the "communication protocol adopted by the electrical equipment 1" as used herein is applicable to not only communication established by the first communications unit 11 with the high-order system 3 (including communication with the router 42) but also communication established by the second communications unit 15 with the appliance(s) 2 and communication established by the cooperating communications unit 16 with other pieces of the electrical equipment 1 as well.

In this embodiment, the communication protocol adopted by the first communications unit 11 may be, for example, a wireless communication compliant with the Wi-Fi^{®} protocol. Considering that multiple pieces of electrical equipment 1 are used in the facility F1, high-speed and stabilized communication is preferably established by the tri-band Wi-Fi^{®} that uses three channels, in particular. According to the tri-band Wi-Fi^{®}, a 2.4 GHz band and two 5 GHz bands called "W52·W53" and "W56" are used. The electrical equipment 1 determines the degree of network congestion by the band steering capability and automatically guides to the least congested one of these three frequency bands, thereby establishing high-speed and stabilized communication.

The execution unit 12 controls and/or monitors at least one appliance 2. In this embodiment, the execution unit 12 is housed and thereby held by the housing 17. In this embodiment, each appliance 2 is both controlled and monitored as the management of the appliance 2. Thus, the execution unit 12 also controls and monitors the appliance 2. The execution unit 12 controls and monitors the appliance 2 based on the result of the information processing performed by the processing unit 13.

The types of control performed by the execution unit 12 on a given appliance 2 include turning ON and OFF (i.e., selectively energizing) the appliance 2 and may include fine tuning according to the function of the appliance 2. For example, if the given appliance 2 is a TV receiver 201, the execution unit 12 performs, on the appliance 2, various types of control including turning ON and OFF (i.e., selectively energizing) the TV receiver 201, changing the channel for viewing, and volume control. In another example, if the appliance 2 is a lighting fixture 202, 204, 206, 208, or 210, then the execution unit 12 performs, on the appliance 2, various types of control including turning ON and OFF, controlling the dimming level, and controlling the lighting color of the lighting fixture 202, 204, 206, 208, or 210. In particular, if the electrical equipment 1 has the function as a switch as in the case of a switch or a breaker or has the function of controlling the power to be supplied to the appliance 2 as in the case of a dimmer, then the execution unit 12 may control the appliance 2 indirectly by controlling the electrical equipment 1. That is to say, if the electrical equipment 1 is a switch, then the execution unit 12 may turn ON and OFF (i.e., selectively energize) the appliance 2 by turning ON and OFF the electrical equipment 1.

The types of monitoring performed by the execution unit 12 on a given appliance 2 include monitoring the ON and OFF states (i.e., energized and deenergized states) of the appliance 2 and may include monitoring the operating status more finely according to the function of the appliance 2. For example, if the given appliance 2 is a TV receiver 201, the execution unit 12 monitors various states of the appliance 2 in terms of, for example, the ON and OFF states (i.e., energized and deenergized states), the channel for viewing, and the volume of the TV receiver 21. In another example, if the appliance 2 is a lighting fixture 202, 204, 206, 208, or 210, then the execution unit 12 monitors various states of the appliance 2 in terms of, for example, the ON and OFF states, the dimming level (brightness), and the lighting color of the lighting fixture 202, 204, 206, 208, or 210. In particular, if the electrical equipment 1 has the function as a switch as in the case of a switch or a breaker or has the function of controlling the power to be supplied to the appliance 2 as in the case of a dimmer, then the execution unit 12 may monitor the appliance 2 indirectly by monitoring the operation of the electrical equipment 1. That is to say, if the electrical equipment 1 is a switch, then the execution unit 12 may monitor the ON and OFF (i.e., energized and deenergized) states of the appliance 2 by monitoring the ON and OFF states of the electrical equipment 1.

The processing unit 13 performs information processing related to the appliance 2. In this embodiment, the processing unit 13 is housed and thereby held by the housing 17. The result of the information processing performed by the processing unit 13 is used by the execution unit 12 for controlling or monitoring the appliance 2. In other words, the execution unit 12 controls and/or monitors the appliance 2 based on the result of the information processing performed by the processing unit 13. The information processing performed by the processing unit 13 may include, for example, processing of determining, based on the result of monitoring the appliance 2, the type of control to be performed on the appliance 2.

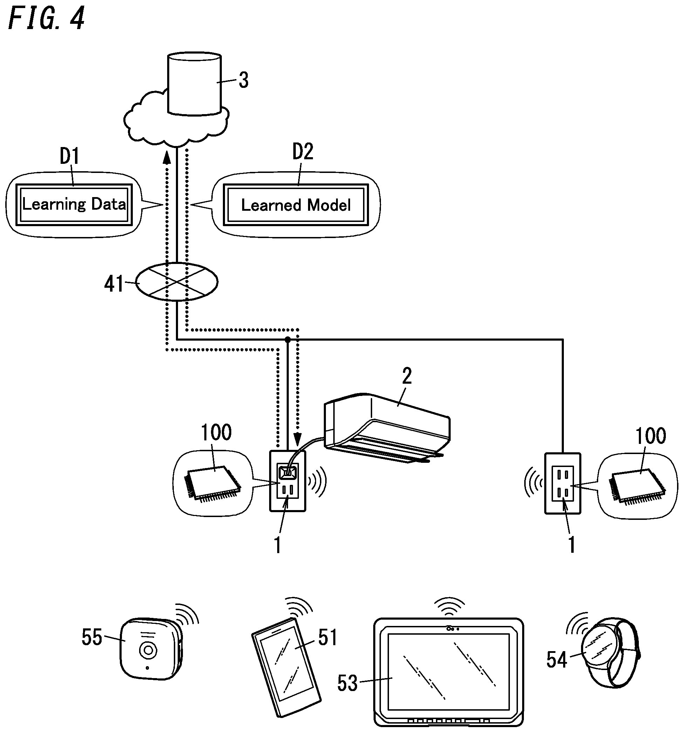

Also, as will be described in detail later in the "(2.5) Appliance management method" section, in this embodiment, the first communications unit 11 receives, from the high-order system 3, a learned model D2 (see FIG. 4) generated by the high-order system 3 through machine learning. Then, the processing unit 13 performs information processing using the learned model D2. That is to say, the processing unit 13 performs information processing using the learned model D2 obtained through machine learning (in other words, using a learned classifier). Stated otherwise, the processing unit 13 generates information processing by artificial intelligence (AI). In addition, the first communications unit 11 transmits, to the high-order system 3, the learning data D1 (see FIG. 4) to be used by the high-order system 3 for machine learning. The first communications unit 11 transmits the learning data D1 to the high-order system 3 at regular or irregular intervals.

The storage unit 14 stores, for example, the learning data D1, the learned model D2, information for use to access the high-order system 3 (such as the address of the high-order system 3), and identification information unique to the electrical equipment 1. In this embodiment, the identification information may be, for example, a media access control (MAC) address. In addition, the storage unit 14 may also store, for example, information required for the execution unit 12, the processing unit 13, and other components to make computations. The storage unit 14 includes a programmable nonvolatile memory such as an electrically erasable programmable read-only memory (EEPROM).

The second communications unit 15 has the function of transmitting and receiving data to/from at least one appliance 2. The second communications unit 15 is configured to be ready to communicate with the interface 21 of the appliance 2. As described above, the communication protocol adopted by the electrical equipment 1 is either a protocol selected from the group consisting of a wireless multi-hop, Wi-Fi^{®}, Bluetooth^{®}, ZigBee^{®}, Ethernet^{®}, power line communication, and Power over Ethernet (PoE)^{®}, or a combination thereof. In this embodiment, the communication protocol adopted by the second communications unit 15 is the power line communication (PLC) that uses a power line as a transmission medium. The electrical equipment 1 is provided on the channel along which electric power is supplied to the appliance 2. Thus, the power line communication enables transmitting and receiving data between the electrical equipment 1 and the appliance 2 even without providing any additional communications channel separately from the power line (including the power cables for the appliance 2).

Furthermore, in this embodiment, the second communications unit 15 is also ready to communicate with the mobile communications device 51 such as a smartphone (see FIG. 4), a tablet computer 53 (see FIG. 4), a wearable device 54 (see FIG. 4), and a sensor device 55 such as an image sensor (see FIG. 4). In this embodiment, the communication between the second communications unit 15 and the mobile communications device 51, the tablet computer 53, the wearable device 54, and the sensor device 55 is wireless communication compliant with the Wi-Fi^{®} or Bluetooth^{®}, for example.

The cooperating communications unit 16 has the function of transmitting and receiving data between multiple pieces of the electrical equipment 1. That is to say, the cooperating communications unit 16 of each piece of the electrical equipment 1 is configured to be ready to communicate with the cooperating communications unit 16 of any other piece of the electrical equipment 1. As described above, the communication protocol adopted by the electrical equipment 1 is either a protocol selected from the group consisting of a wireless multi-hop, Wi-Fi^{®}, Bluetooth^{®}, ZigBee^{®}, Ethernet^{®}, power line communication, and Power over Ethernet (PoE)^{®}, or a combination thereof. In this embodiment, the communication protocol adopted by the cooperating communications unit 16 is the power line communication (PLC) that uses a power line as a transmission medium. The electrical equipment 1 is provided on the channel along which electric power is supplied to the appliances 2. Thus, the power line communication enables transmitting and receiving data between a given piece of the electrical equipment 1 and other pieces of the electrical equipment 1 even without providing any additional communications line separately from the power line.

According to this embodiment, the first communications unit 11, execution unit 12, and processing unit 13 of the electrical equipment 1 perform the three functions, namely, the telemetric function (i.e., remote information collecting function), the control function, and the network management function, of the appliance management method. The telemetric function is the function of acquiring data that has been push-transmitted from a node (i.e., a power supply destination as viewed from the electrical equipment 1). The control function is the function of transmitting and receiving data in accordance with the semantics of a synchronized distributed database (high-order system 3). The network management function is the function of dynamically adapting a mesh network including the electrical equipment 1 to the environment of a space in which the electrical equipment 1 is installed (i.e., the facility F1).

In this embodiment, to perform these functions, an OpenSync^{™} module manufactured by Plume Design, Inc., for example, may be installed in the electrical equipment 1. Specifically, using a message queue telemetry transport (MQTT) as the telemetric function, the electrical equipment 1 collects measuring information (measured value) upon the request (publish) from an appliance 2 as a node to be connected to the electrical equipment 1. In addition, the electrical equipment 1 converts the measuring information into a standardized format such that the measuring information may be shared by a plurality of different appliances 2 and not only makes the plurality of appliances 2 share the measuring information but also transmits the measuring information upon the request (subscribe) from the high-order system 3. To perform the control function, the electrical equipment 1 performs not only processing the control signal from the high-order system 3 but also transmitting and receiving data, prioritizing, filtering, and blocking by using OVSDB^{™} as a distributed database and in accordance with the database. To perform the network management function, the electrical equipment 1 dynamically adapts a mesh network to the environment of the space (i.e., the facility F1) by using Open vSwitch^{™}, thereby performing, for example, connection management for the user, security check, and management of the appliance 2.

The high-order system 3 includes the high-order communications unit 31, a high-order control unit 32, a high-order monitoring unit 33, an authentication unit 34, a storage unit 35, and a model generation unit 36.

The high-order communications unit 31 has the function of communicating with the first communications unit 11 of the electrical equipment 1. In this embodiment, the high-order communications unit 31 is connected to the public network 41 and communicates with the electrical equipment 1 via the public network 41.

The high-order control unit 32 controls at least one appliance 2. The types of control performed by the high-order control unit 32 on the appliance 2, as well as the execution unit 12 of the electrical equipment 1, include turning ON and OFF (i.e., selectively energizing) the appliance 2 and may include fine tuning according to the function of the given appliance 2.

The high-order monitoring unit 33 monitors the appliance 2. The types of monitoring performed by the high-order monitoring unit 33 on the appliance 2, as well as the execution unit 12 of the electrical equipment 1, include monitoring the ON and OFF states (i.e., energized and deenergized states) of the appliance 2 and may include monitoring the operating status more finely according to the function of the given appliance 2.

The authentication unit 34 performs authentication on the electrical equipment 1. In this embodiment, after the electrical equipment 1 has been energized, the authentication unit 34 is accessed by the electrical equipment 1 via the public network 41 and performs authentication on the electrical equipment 1. When authenticating the electrical equipment 1 successfully, the authentication unit 34 issues an IP address to the electrical equipment 1.

The storage unit 35 stores at least learning data D1 for use to generate a learned model D2 and the learned model D2 that has been generated. The storage unit 35 also stores, as registered information, information about the electrical equipment 1 that has been authenticated by the authentication unit 34. As used herein, the "registered information" includes at least identification information for the electrical equipment 1. In this embodiment, the registered information includes not only the identification information for the electrical equipment 1 but also an IP address, a user ID, a password, and other pieces of information assigned to the electrical equipment 1. That is to say, these pieces of information about the electrical equipment 1 which has been authenticated successfully by the authentication unit 34 are stored as the registered information in the storage unit 35. Note that the information stored in the storage unit 35 may be updated (as well as added or deleted) as appropriate.

The model generation unit 36 generates the learned model D2 by machine learning. In this embodiment, the model generation unit 36 generates the learned model D2 by performing machine learning using the learning data D1 transmitted from the electrical equipment 1 at regular or irregular intervals.

As can be seen, the high-order system 3 has a learner and has the capability of learning by machine learning. In this example, the high-order system 3 is supposed to generate the learned model D2 (i.e., a learned classifier) by deep learning using the learning data D1 collected from multiple pieces of electrical equipment 1. The model generation unit 36 generates a learning data set by subjecting the learning data D1 to preprocessing and enters the learning data set to the learner. The learner of the model generation unit 36 is a learner for generating the learned model D2. The learner is actually implemented as a software program for learning including, for example, a network model for a neural network and a hyper parameter. The model generation unit 36 generates the learned model D2 by repeatedly performing the processing of entering the learning data set into such a learner.

The learned model D2 generated by the model generation unit 36 is transmitted to the electrical equipment 1 as described above and introduced into the processing unit 13 of the electrical equipment 1. Introducing the learned model D2 generated by the model generation unit 36 into the processing unit 13 allows a learned classifier to be generated. Then, when input data is entered into the learned classifier (processing unit 13), the classifier delivers output data. In this case, in response to input of information about the result of monitoring of the appliance 2 into the classifier (processing unit 13), the classifier (processing unit 13) outputs information about the specifics of control to be performed on the appliance 2.

The high-order system 3 includes, as a major constituent element, a computer system (e.g., a cloud computing system in this embodiment as an example) including one or more processors and one or more memories. The computer system performs the functions of the high-order system 3 by making the one or more processors execute a program stored in the one or more memories. The program may be stored in advance in the memory. Alternatively, the program may also be distributed after having been stored in a non-transitory storage medium such as a memory card or downloaded via a telecommunications line. In other words, the program is designed to cause the one or more processors to serve as the high-order system 3.

Each appliance 2 includes an interface 21 (abbreviated as "I/F" in FIG. 3) and a functional unit 22. Although only one appliance 2 out of the plurality of appliances 2 is shown in FIG. 3, each of the other appliances 2 has the same configuration as the one shown in FIG. 3.

The interface 21 has the function of transmitting and receiving data to/from the electrical equipment 1. In this embodiment, the interface 21 may be configured, for example, to be ready to communicate with the second communications unit 15 of the electrical equipment 1 by power line communication (PLC). The interface 21 enables controlling and monitoring the appliance 2 by transmitting and receiving data to/from the electrical equipment 1.

The functional unit 22 has the basic function as the appliance 2. Specifically, if the appliance 2 is the TV receiver 201, the functional unit 22 has the function of the TV receiver. If the appliance 2 is the washing machine, the functional unit 22 has the function of the washing machine. If the appliance 2 is the lighting fixture 202, 204, 206, 208, or 210, the functional unit 22 has the function of the lighting fixture.

### (2.4) Details of processor

Next, a detailed configuration for a processor 100 included in the electrical equipment 1 according to this embodiment will be described with reference to FIG. 2.

Among the constituent elements of the electrical equipment 1, at least the processing unit 13 is implemented as a single-chip (single-package) processor 100. The processor 100 is housed (built) in the housing 17 and thereby held by the housing 17.

In this embodiment, a processor of a micro chip size is used as the processor 100. For example, the processor 100 may be implemented as a chip, of which the size is equal to or less than 300 µm in plan view. In other words, the processing unit 13 is implemented as the processor 100 of a chip size equal to or smaller than a virtual square, each side of which has a length of 300 µm. For example, the processor 100 is a chip component, which has a square shape in plan view as shown in FIG. 2 and each side of which has a length L1, L2 equal to or less than 300 µm.

Furthermore, when viewed in plan, the processor 100 preferably has each side with a length L1, L2 equal to or less than 200 µm. More preferably, when viewed in plan, the processor 100 has each side with a length L1, L2 equal to or less than 100 µm. In that case, the processing unit 13 will be implemented as the processor 100 of a chip size equal to or smaller than a virtual square, each side of which has a length of 100 µm.

Also, in this embodiment, the chip thickness L3 of the processor 100 is sufficiently smaller than the length L1, L2 of each side. That is to say, in this embodiment, the processor 100 may be implemented as, for example, a flat plate chip. The electrical equipment 1 according to this embodiment may significantly reduce the area and volume occupied by the execution unit 12 and the processing unit 13.

In this embodiment, the processor 100 performs not only the function of the processing unit 13 but also at least the function of the execution unit 12 as well. In other words, the execution unit 12 and the processing unit 13 are implemented as the processor 100. More specifically, the processor 100 serving as a single-chip ultra-small computer performs the functions of the execution unit 12 and the processing unit 13. The processor 100 performs the functions of the execution unit 12 and the processing unit 13 by executing a program stored in one or more memories. The program may be stored in advance in the memory. Alternatively, the program may also be distributed after having been stored in a non-transitory storage medium such as a memory card or downloaded via a telecommunications line. In other words, the program is designed to cause the one or more processors to serve as the execution unit 12 and the processing unit 13.

In this embodiment, the processor 100 may be, for example, a processor that uses RISC (RISC-V) as an instruction set architecture. The number of transistors included in the processor 100 may be, for example, equal to or greater than 100 × 10³ and equal to or less than 1 × 10⁶. Also, the power consumption of the processor 100 may be, for example, equal to or less than 10 mW. Furthermore, the drive clock frequency of the processor 100 may be, for example, equal to or less than 10 MHz.

In addition, the electrical equipment 1 includes not only the constituent elements described above but also a power supply circuit for supplying power to the processor 100 and other components. The power supply circuit may be electrically connected to, for example, the power grid 43, converts AC power supplied from the power grid 43 into DC power, and supplies the DC power to the processor 100 and other components.

### (2.5) Appliance management method

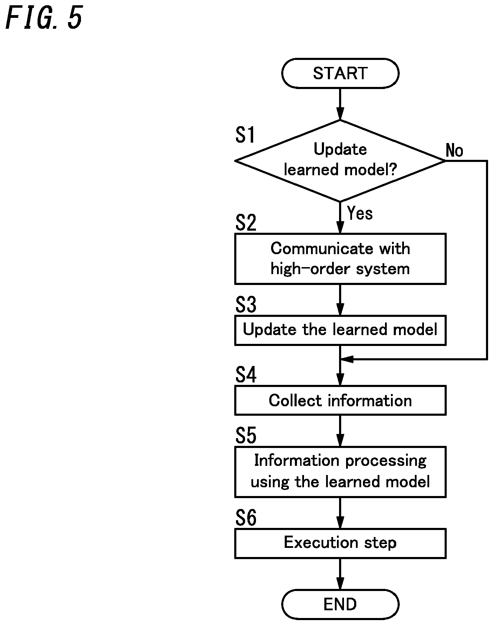

Next, an appliance management method according to this embodiment will be described with reference to FIGS. 4 and 5.

FIG. 4 illustrates how to perform an exemplary appliance management method using the appliance management system 10 according to this embodiment. FIG. 5 is a flowchart showing an exemplary procedure of the appliance management method according to this embodiment. In this example, a network environment such as a Wi-Fi^{®} network is supposed to have been established in advance in the facility F1 to which the electrical equipment 1 is introduced. In addition, in this embodiment, each appliance 2 is supposed to be both controlled and monitored as the management of the appliance 2 as described above.

In the appliance management method according to this embodiment, the electrical equipment 1 transmits, as a basic operation, the learning data D1 to the high-order system 3 via the public network 41 at regular or irregular intervals. The high-order system 3 collects the learning data D1 from multiple pieces of electrical equipment 1 that form the appliance management system 10. The electrical equipment 1 makes the first communications unit 11 transmit, for example, pieces of information, including the measuring information about the appliance 2 obtained by making the execution unit 12 monitor the appliance 2 and history of control of the appliance 2 by the execution unit 12, as the learning data D1 to the high-order system 3. The "measuring information" will be described in detail later in the "(2.6) Execution step" section.

In the high-order system 3, the model generation unit 36 performs machine learning using the learning data D1, thereby generating the learned model D2 as needed. The learned model D2 thus generated is temporarily stored in the storage unit 35 of the high-order system 3.

In this case, the learned model D2 is preferably generated for each type, product number, or individual product of the appliance 2. For example, if a washing machine, a refrigerator, and two air conditioners are respectively connected as four appliances 2 to four pieces of electrical equipment 1, then the model generation unit 36 generates the learned model D2 for each of the three types of appliances 2, namely, the washing machine, refrigerator, and air conditioners. Alternatively, in the same situation, the model generation unit 36 may also generate the learned model D2 for each individual product of the four appliances 2 (namely, the washing machine, the refrigerator, and the two air conditioners).

Furthermore, the learned model D2 is preferably generated for each attribute of the user or for each individual user. Examples of the "attribute of the user" as used herein include the age group (generation), gender, height, and shape of the user. For example, if a single appliance 2 is used by two or more users, at least one of whom belong(s) to one age group and the other(s) of whom belong(s) to another age group, the model generation unit 36 generates two learned models D2 for the two age groups (i.e., the attributes), respectively, to which the two or more users belong. In another example, if a single appliance 2 is used by two users, the model generation unit 36 may generate the learned model D2 for each (individual) user.

In this embodiment, the learned model D2 is supposed to be generated, for example, for each type of the appliance 2 and for each attribute of the user. Thus, the high-order system 3 collects the learning data D1 for use to generate the learned model D2 for each type of the appliance 2 and each attribute of the user as well. Then, the high-order system 3 generates the learned model D2 for each type of the appliance 2 and for each attribute of the user by performing machine learning for each type of the appliance 2 and for each attribute of the user. The learned model D2 thus generated is stored in the storage unit 35 according to each type of the appliance 2 and each attribute of the user.

The electrical equipment 1 updates the learned model D2 at regular or irregular intervals. In this embodiment, the processing unit 13 performs the information processing using the learned model D2 as described above. Thus, in the state where no learned model D2 is stored in the electrical equipment 1 (i.e., in the initial state), the electrical equipment 1 updates the learned model D2. In addition, the electrical equipment 1 also updates the learned model D2 when receiving a notification to update the learned model D2 from the high-order system 3 via communication.

Specifically, as shown in FIG. 5, the electrical equipment 1 determines whether the learned model D2 should be updated or not (in S1). If the learned model D2 should be updated (if the answer is YES in S1), then the electrical equipment 1 communicates with the high-order system 3 (in S2) to receive the learned model D2 from the high-order system 3 via the public network 41. Upon receiving the learned model D2, the electrical equipment 1 updates the learned model D2 stored in the storage unit 14 (in S3). Then, the electrical equipment 1 collects information for use in the information processing by the processing unit 13 (in S4). At this time, the electrical equipment 1 may collect, for example, as the information for use in the information processing by the processing unit 13, the result of monitoring the appliance 2 by the execution unit 12, i.e., the measuring information and other pieces of information. Optionally, the electrical equipment 1 may also collect information for use in the information processing by the processing unit 13 by, for example, making the second communications unit 15 communicate with the appliance 2 or making the cooperating communications unit 16 communicate with another piece of electrical equipment 1.

Furthermore, in this embodiment, the electrical equipment 1 may also make the second communications unit 15 communicate with the mobile communications device 51, the tablet computer 53, the wearable device 54, and the sensor device 55 as shown in FIG. 4. Thus, the electrical equipment 1 may collect information about, for example, the user's current location, body temperature, or physical condition as information for use in the information processing by the processing unit 13 from the mobile communications device 51, the tablet computer 53, the wearable device 54, and the sensor device 55.

On the other hand, if the learned model D2 should not be updated (if the answer is NO in S1), then the electrical equipment 1 skips the steps S2, S3 and collects information for use in the information processing by the processing unit 13 (in S4).

When the information for use in the information processing by the processing unit 13 is collected, the electrical equipment 1 makes the processing unit 13 perform the information processing using the learned model D2 (in S5). That is to say, the electrical equipment 1 makes the processing unit 13 output information about the control of the appliance 2 or information about monitoring of the appliance 2 based on the information thus collected as input for the processing unit 13. In other words, the processing unit 13 generates information for use to make the execution unit 12 control or monitor the appliance 2 by the information processing using the learned model D2. Then, the electrical equipment 1 starts performing an execution step of controlling and/or monitoring (e.g., both controlling and monitoring, in this embodiment) the appliance 2 based on the result of the information processing by the processing unit 13 (in S6). The execution step will be described in detail later in the "(2.6) Execution step" section.

Note that the flowchart shown in FIG. 5 shows only an exemplary procedure of the appliance management method and any of these steps may be omitted as appropriate, an additional step may be performed as needed, or these steps may be performed in an appropriately modified order. For example, in FIG. 5, the communication between the electrical equipment 1 and the high-order system 3 is established when the electrical equipment 1 acquires the learned model D2 from the high-order system 3. However, this is only an example and should not be construed as limiting. For example, the communication between the electrical equipment 1 and the high-order system 3 may also be established when any of various types of software installed in the electrical equipment 1, other than the learned model D2, is updated. In addition, in the remote-control step to be described later, communication is also established between the electrical equipment 1 and the high-order system 3.

As can be seen from the foregoing description, the appliance management method according to this embodiment allows electrical equipment 1 serving as power distribution equipment to manage (i.e., control and/or monitor) an appliance 2. In addition, information processing required to manage the appliance 2 is also performed by the electrical equipment 1 serving as power distribution equipment. This enables managing the appliance 2 even without involving communication between the high-order system 3 and the appliance 2. Consequently, this achieves the advantage of reducing the chances of causing inconveniences depending on the communication environment. For example, this may reduce the chances of the communication causing latency in controlling and/or monitoring the appliance 2 and/or a communication failure preventing the appliance 2 from being controlled or monitored.

Furthermore, in the appliance management system 10 according to this embodiment, multiple pieces of electrical equipment 1 may communicate with each other via their respective cooperating communications units 16. This allows the multiple pieces of electrical equipment 1 to perform the function required to manage (i.e., control and/or monitor) the appliance 2 in cooperation with each other. Consequently, this enables adding such a function to the appliance 2 by using the power distribution equipment (electrical equipment 1) as a power infrastructure.

### (2.6) Execution step

Next, the execution step of the appliance management method according to this embodiment will be described in detail with reference to FIG. 4.

First, a scene on which the electrical equipment 1 (e.g., a wiring device serving as an outlet in FIG. 4) monitors an appliance 2 (e.g., an air conditioner in FIG. 4) will be described.

The execution step includes acquiring measuring information about the appliance 2 by making the electrical equipment 1 monitor the appliance 2. The measuring information includes at least one of: electric energy information about the electric energy to be consumed by the appliance 2; operation information about the operation of the appliance 2; or environmental information measured by the appliance 2 about an environment surrounding the appliance 2.

As used herein, the "electric energy information" includes information in general about the electric energy consumed by the appliance 2. Examples of the electric energy information include an instantaneous value of the consumed electric energy, the electric energy consumed by the appliance 2 in a given time slot of the day, and the value of an electric current or voltage supplied to the appliance 2. Alternatively, examples of the electric energy information may also include the waveform of the consumed electric energy, the waveform of the electric current, and the waveform of the voltage. Also, attribute information about the attribute of the appliance 2 such as the type of the appliance 2 (which may be a TV receiver, an air conditioner, or a lighting fixture, for example), the model of the appliance 2, or the characteristics of the appliance 2 may be estimated based on the waveform of the consumed electric energy, the waveform of the electric current, or the waveform of the voltage. Therefore, the electric energy information includes the attribute information about the appliance 2. Such electric energy information may be acquired by the electrical equipment 1 by having a sensor (such as a current sensor) provided for the electrical equipment 1 make measurement. Alternatively, the electric energy information may also be acquired by the electrical equipment 1 from the appliance 2 via communication with the appliance 2.

Also, the "operation information" as used herein includes information in general about the operation of the appliance 2. The operation information includes, for example, information about the ON/OFF states (i.e., energized and deenergized states) and the operation mode of the appliance 2. More specifically, if the appliance 2 is the TV receiver 201, the operation information includes, for example, information about the channel for viewing and volume of the TV receiver 201. If the appliance 2 is the air conditioner 209, the operation information includes, for example, information about the temperature setting, the timer setting state, the air direction, and the air volume. If the appliance 2 is a video recorder and player, the operation information includes, for example, information about the programs scheduled for recording and the recorded programs. If the appliance 2 is a washing machine, the operation information includes, for example, information about the amount of detergent required, the modes such as washing, rinsing, dewatering, and drying modes, and operating durations in the respective modes. If the appliance 2 is a refrigerator, the operation information includes, for example, information about the temperature inside, settings for the respective compartments, and the time required for making ice. If the appliance 2 is a packaged air conditioner (air-conditioning equipment), the operation information includes, for example, information about the operating hours, the cumulative operating hours, filter used hours (which is the time that has passed since the filter was reset), and temperature or humidity sensor information. If the appliance 2 is a copy machine, the operation information includes, for example, information about operating hours, the quantity of residual toner, the number of paper sheets used, and the number of paper sheets remaining. Optionally, the operation information may further include, with respect to the appliance 2, the operation log or error information to be provided for the user, and the operation log or error information to be provided for a serviceman. These pieces of operation information may be acquired by the electrical equipment 1 from the appliance 2 via communication with the appliance 2, for example.

Furthermore, the "environmental information" as used herein includes information in general that has been measured by the appliance 2 about the environment surrounding the appliance 2. Examples of the environmental information include information about various physical quantities such as temperature (room temperature), humidity, illuminance, atmospheric pressure, velocity, acceleration, angular velocity, angular acceleration, sound, and odor. The environmental information may further include information about, for example, the presence or absence of any person in the space surrounding the appliance 2, the ultraviolet radiation dose, the infrared radiation dose, or the received radio wave strength. These pieces of environmental information are acquired, based on the results of measurement obtained by the sensor (such as a temperature sensor) provided for the appliance 2, for example, by the electrical equipment 1 from the appliance 2 via communication with the appliance 2.

In the execution step, the electrical equipment 1 acquires these pieces of measuring information at regular or irregular intervals (i.e., as needed). Then, the measuring information acquired by the electrical equipment 1 may be used, for example, by the processing unit 13 for the information processing.

Furthermore, the measuring information that has been obtained about the appliance 2 in the execution step by making the electrical equipment 1 monitor the appliance 2 is collected by the high-order system 3 from one or more pieces of electrical equipment 1 and aggregated in a single place (i.e., the high-order system 3). That is to say, the multiple pieces of measuring information acquired by the multiple pieces of electrical equipment 1 are aggregated in the high-order system 3 by the telemetric function of the high-order system 3. In other words, the appliance management method according to this embodiment further includes a telemetry step. The telemetry step includes making the high-order system 3 collect, from one or more pieces of the electrical equipment 1, measuring information that has been obtained about the appliance 2 in the execution step by making the electrical equipment 1 monitor the appliance 2. The telemetry step will be described in detail later in the "(2.7) Telemetric function" section.

In this embodiment, starting the dedicated application software on either the mobile communications device 51 or the operating device 52 (see FIG. 2), for example, causes either the mobile communications device 51 or the operating device 52 to access the high-order system 3. Letting the user enter the user ID and password on either the mobile communications device 51 or the operating device 52 in this state turns the appliance 2 associated with the user into a monitorable condition. Specifically, this makes either the mobile communications device 51 or the operating device 52 ready to accept the input of a monitoring command for monitoring the appliance 2. In a situation where a plurality of appliances 2 are associated with a single user, the monitoring command includes information for designating (i.e., selecting) an appliance 2 to monitor among the plurality of appliances 2.

Consequently, this allows the user who is currently outside of the facility F1, for example, to check out information about the electric energy consumed by an appliance 2 in the facility F1 (i.e., the electric energy information) using either the mobile communications device 51 or the operating device 52. In the same way, this also allows the user who is currently outside of the facility F1, for example, to check out information about the operation of an appliance 2 in the facility F1 (i.e., the operation information) and information measured by the appliance 2 about the environment surrounding the appliance 2 (i.e., the environmental information) using either the mobile communications device 51 or the operating device 52. Therefore, the user is allowed to monitor the appliance 2 remotely.

Next, a scene on which the electrical equipment 1 (e.g., a wiring device serving as an outlet in FIG. 4) controls an appliance 2 (e.g., an air conditioner in FIG. 4) will be described.

The execution step includes transmitting data from the electrical equipment 1 toward a power supply destination. As used herein, the "power supply destination" means a destination to which electric power is supplied as viewed from the electrical equipment 1, i.e., a downstream end of the power supply channel. Specifically, the power supply destinations for the electrical equipment 1 implemented as the distribution board 101 include the plurality of wiring devices 102-112 and the plurality of appliances 2 to be connected to the plurality of wiring devices 102-112. On the other hand, for the multiple pieces of electrical equipment 1 implemented as the wiring devices 102-112, the power supply destinations include the appliances 2 to be connected to the respective wiring devices 102-112. In this embodiment, the second communications unit 15 of the electrical equipment 1 is ready to communicate via the power line communication (PLC), for example. Thus, data may be transmitted toward either the electrical equipment 1 or an appliance 2 as the power supply destination which is connected to the electrical equipment 1 through the power supply channel (power line).

In this case, the execution step includes controlling an appliance 2 in accordance with the data transmitted from the electrical equipment 1 to the appliance 2. That is to say, the appliance 2 is controlled in accordance with the data transmitted from the electrical equipment 1. Thus, transmitting data from the electrical equipment 1 to the power supply destination as described above enables controlling the appliance 2 connected to the electrical equipment 1.

In this embodiment, the execution unit 12 performs at least the control of the appliance 2 based on the result of the information processing by the processing unit 13. The information processing performed by the processing unit 13 includes, for example, processing of determining the specifics of control of the appliance 2 based on the result of monitoring of the appliance 2. In particular, in this embodiment, the information processing is performed by the processing unit 13 by using the learned model D2.

For example, if the appliance 2 is the TV receiver 201, the processing unit 13 performs the information processing to estimate the user's preference based on the history of viewing of programs on the channels that the user has selected so far on the TV receiver 201 (i.e., based on the result of monitoring). Then, the processing unit 13 performs the information processing to generate a control instruction (specifics of control) for changing the channel for viewing to the one that reflects the user's preference that has been estimated. This allows the execution unit 12 to control the appliance 2 to change the channel for viewing to the one that meets the user's preference.

In another example, if the appliance 2 is the air conditioner 209, the processing unit 13 performs the information processing to estimate the relation between the user's physical conditions and the operating history including the past temperature settings of the air conditioner 209 (i.e., the result of monitoring). Then, the processing unit 13 performs the information processing to generate a control instruction (specifics of control) for changing the temperature setting to the one suitable for the user's current physical conditions that have been estimated. This allows the execution unit 12 to control the appliance 2 to change the temperature setting to the one suitable for the user's current physical conditions.

Furthermore, the electrical equipment 1 may also control, in accordance with the measuring information that has been obtained about a given appliance 2 in the execution step by making the electrical equipment 1 monitor the appliance 2, any other appliance 2, for example. This enables controlling a plurality of appliances 2 synchronously with each other. For example, if the TV receiver 201 and the lighting fixture 202 need to be controlled in synch with each other, a control operation such as adjusting the brightness of the lighting fixture 202 according to the channel for viewing on the TV receiver 201 may be performed. In another example, if the air conditioner 209 and the lighting fixture 210 need to be controlled in synch with each other, a control operation such as adjusting the lighting color of the lighting fixture 210 in accordance with the information provided by the temperature sensor or humidity sensor of the air conditioner 209 may be performed. This enables even a function that is not introduced into the appliance 2 itself to be performed by the control operation using the electrical equipment 1.

The appliance management method according to this embodiment further includes a remote-control step. To perform the remote-control step, the first communications unit 11 receives, from the high-order system 3, a control instruction instructing that the appliance 2 be controlled. The execution unit 12 controls the appliance 2 in accordance with the control instruction. That is to say, the remote-control step includes transmitting a control instruction, instructing the electrical equipment 1 to control the appliance 2 in the execution step, from the high-order system 3 to the electrical equipment 1. The control instruction instructing that the appliance 2 be controlled is transmitted as appropriate from the high-order system 3 to the electrical equipment 1 via the public network 41. This allows the user to control any appliance 2 installed in the facility F1 by sending inquiry to the high-order system 3 using either the mobile communications device 51 or the operating device 52, for example.

In this embodiment, starting the dedicated application software on either the mobile communications device 51 or the operating device 52, for example, causes either the mobile communications device 51 or the operating device 52 to access the high-order system 3. Letting the user enter the user ID and password on either the mobile communications device 51 or the operating device 52 in this state turns the appliance 2 associated with the user into a controllable condition. Specifically, this makes either the mobile communications device 51 or the operating device 52 ready to accept the input of a control command for controlling the appliance 2. In a situation where a plurality of appliances 2 are associated with a single user, the control command includes information for designating (i.e., selecting) an appliance 2 to control among the plurality of appliances 2. The high-order system 3 generates a control instruction in accordance with the control command thus input and transmits the control instruction to the electrical equipment 1.

Consequently, this allows the user who is currently outside of the facility F1, for example, to control any appliance 2 in the facility F1 using either the mobile communications device 51 or the operating device 52. Therefore, the user is allowed to control the appliance 2 remotely.

As can be seen from the foregoing description, the appliance management method according to this embodiment enables, if the electrical equipment 1 is connected to the high-order system 3 (cloud computing system), the appliance 2 to be monitored and controlled remotely by making the electrical equipment 1 communicate with the high-order system 3. In addition, this also enables, even if the connection (communication) between the electrical equipment 1 and the high-order system 3 is cut off, the electrical equipment 1 to serve as the agent of monitoring and controlling the appliance 2. That is to say, the function of managing (i.e., controlling and monitoring) the appliance 2 involving the information processing by the processing unit 13 is completed on the side of the edge including the electrical equipment 1, thus enabling monitoring and controlling the appliance 2 in the facility F1 with more reliability. As used herein, the "side of the edge" refers to terminals (appliances) in general on the side of the edge which are connected to the cloud computing system (high-order system 3) via the network (such as the public network 41). Thus, if there are supposed to be three layers consisting of the cloud computing, fog computing, and edge computing, then fog computing and edge computing are included on the "side of the edge."

### (2.7) Telemetric function

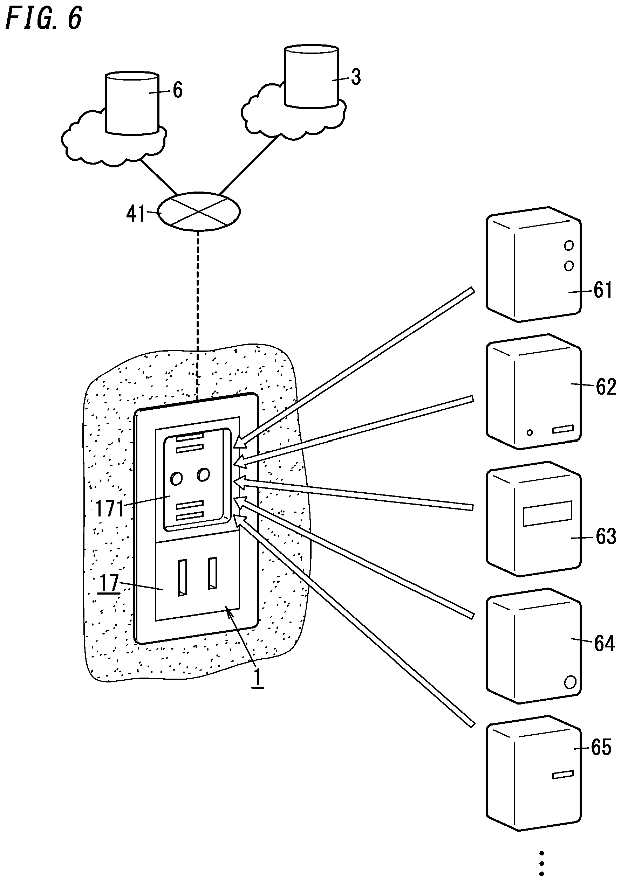

Next, the telemetry step in which the high-order system 3 collects measuring information from one or more pieces of electrical equipment 1 will be described with reference to FIG. 6.

As shown in FIG. 6, a sensor system 6 is connected to the public network 41. The sensor system 6 is a system for managing the environmental information that has been measured by sensors 61-65 serving as exemplary appliances 2. The sensor system 6 accumulates, as big data, for example, many pieces of environmental information that have been collected by the high-order system 3.

In the example illustrated in FIG. 6, any one of various types of sensors 61-65 may be attached to the electrical equipment 1 (e.g., a wiring device serving as an outlet in this example). The sensors 61-65 are various types of sensors such as a temperature sensor, a humidity sensor, an illuminance sensor, a (barometric) pressure sensor, an acceleration sensor, a vibration sensor, a sound sensor, and an odor sensor. Specifically, these sensors 61-65 each have the housing of the same shape and are each removably attached to an attachment portion 171 of the electrical equipment 1. In this example, a magnet, for example, is disposed in the attachment portion 171 to allow the electrical equipment 1 to hold any one of these sensors 61-65 with the magnetic force of the magnet. In addition, the attachment portion 171 is preferably configured to supply power to each of these sensors 61-65 as appliances 2 by a contactless feeding method. Such a configuration enables providing the function of any one of the sensors 61-65 for the electrical equipment 1 according to the intended use.

As can be seen, in the appliance management method according to this embodiment, the environmental information includes information about the physical quantity detected by any of these sensors 61-65 provided as an exemplary appliance 2 for the electrical equipment 1. In this case, none of these sensors 61-65 has to be removably attached to the electrical equipment 1 as in the example shown in FIG. 6. Alternatively, any of these sensors 61-65 may form an inseparable part of the housing of the electrical equipment 1, for example. Still alternatively, any of the sensors 61-65 may also be built in the housing of the electrical equipment 1.

### (3) Variations

Note that the first embodiment described above is only an exemplary one of various embodiments of the present disclosure and should not be construed as limiting. Rather, the first exemplary embodiment may be readily modified in various manners depending on a design choice or any other factor without departing from the scope of the present disclosure. Also, the drawings to be referred to in the description of embodiments are schematic representations. That is to say, the ratio of the dimensions (including thicknesses) of respective constituent elements illustrated on the drawings does not always reflect their actual dimensional ratio. Furthermore, the functions of the electrical equipment 1 and appliance management system 10 according to the first embodiment may also be implemented as an appliance management method, a computer program, or a non-transitory storage medium that stores a computer program thereon.

Next, variations of the first exemplary embodiment will be enumerated one after another. Note that the variations to be described below may also be adopted in combination as appropriate.

The electrical equipment 1 and appliance management system 10 according to the present disclosure each include a computer system. The computer system may include, as principal hardware components, a processor and a memory. The functions of the electrical equipment 1 and the appliance management system 10 according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

Also, in the embodiment described above, at least some functions of the appliance management system 10 are integrated together in a single housing. However, this is not an essential configuration for the appliance management system 10. Alternatively, those constituent elements of the appliance management system 10 may be distributed in multiple different housings. Still alternatively, at least some functions, provided for the electrical equipment 1, of the appliance management system 10 may be provided in a different housing from the electrical equipment 1. Yet alternatively, at least some functions of the electrical equipment 1 may also be implemented as, for example, a cloud computing system as well.

Conversely, at least some functions distributed in multiple devices in the first embodiment may be aggregated together in a single housing. For example, the functions distributed in the electrical equipment 1 and the high-order system 3 may be aggregated together in a single housing.

Also, the appliance management method does not have to be used in a single-family dwelling house. Alternatively, the appliance management method is also applicable for use in a dwelling facility other than a single-family dwelling house or in a non-dwelling facility. For example, this appliance management method is also applicable for use in non-dwelling facilities such as stores (tenants), offices, welfare facilities, educational institutions, hospitals, and factories.

Furthermore, in the first embodiment described above, an OpenSync^{™} module manufactured by Plume Design, Inc., is installed in the electrical equipment 1. However, it is not essential for the appliance management method to use the OpenSync^{™} module. Likewise, it is not essential for the appliance management method, either, to use MQTT as the telemetric function or to use OVSDB^{™} as a distributed database, for example.

Furthermore, the communication protocol adopted by the electrical equipment 1 only needs to be either a protocol selected from the group consisting of a wireless multi-hop, Wi-Fi^{®}, Bluetooth^{®}, ZigBee^{®}, Ethernet^{®}, power line communication (PLC), and Power over Ethernet (PoE)^{®}, or a combination thereof. That is to say, the communication protocol adopted in the first embodiment described above is only an example and should not be construed as limiting. For example, the communication protocol adopted by the first communications unit 11 may also be a wireless communication protocol other than the tri-band Wi-Fi^{®} or may even be a wired communication protocol. Furthermore, the communication protocol adopted by the second communications unit 15 may be a communication protocol other than the power line communication (PLC) and may also be, for example, a wireless communication protocol such as the Wi-Fi^{®}. Furthermore, the communication protocol adopted by the electrical equipment 1 may also be a communication protocol that uses a cellular phone network such as the third generation (3G) network, the long-term evolution (LTE) network, the fourth generation network (4G), or the fifth generation network (5G).

Furthermore, the attachment portion 171 does not have to employ the contactless feeding method but may also include, for example, a contact terminal and be configured to supply power from the terminal to any of the sensors 61-65 as exemplary appliances 2.

### (Second embodiment)

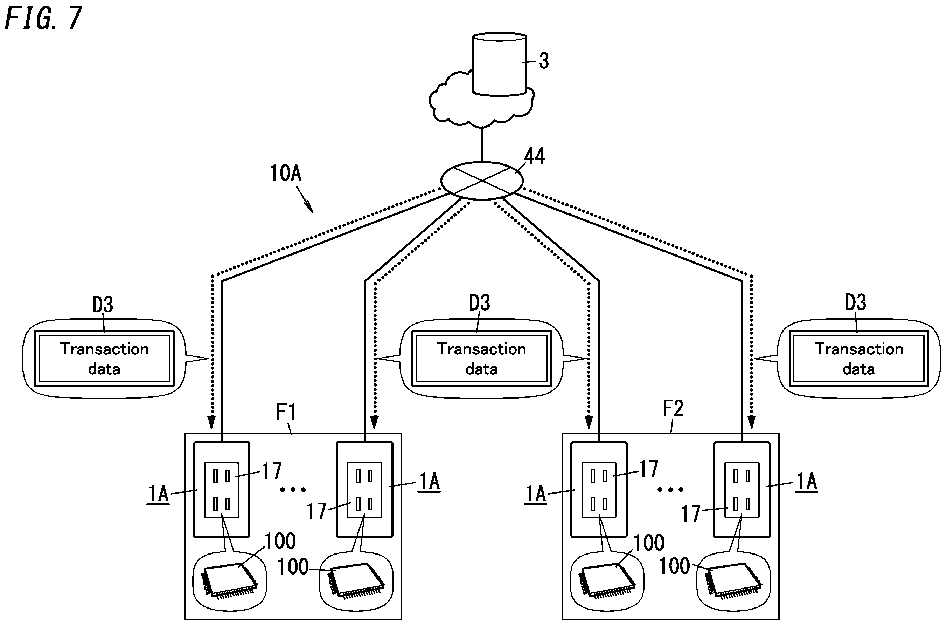

In an appliance management system 10A according to a second embodiment, multiple pieces of electrical equipment 1A are installed as shown in FIG. 7 in a plurality of facilities F1, F2, which is a major difference from the appliance management system 10 according to the first embodiment described above. In the following description, any constituent element of this second embodiment, having the same function as a counterpart of the first embodiment described above, will be designated by the same reference numeral as that counterpart's, and description thereof will be omitted herein as appropriate.

In this embodiment, the facility F1 is supposed to be a single-family dwelling house in which a certain user lives, for example, and the facility F2 is supposed to be an office for which the same user as the resident of the facility F1 works. In such a situation where the plurality of facilities F1, F2 are used by the same user, the user manages (i.e., controls and/or monitors) both the appliance 2 installed in the facility F1 and the appliance 2 installed in the facility F2.

In this embodiment, each of the multiple pieces of electrical equipment 1A has an authentication function in such a situation. That is to say, the processing unit 13 has the authentication function. The processing unit 13 performs the information processing if the authentication is success. As used herein, the "authentication" refers to verifying the authenticity of a given target of authentication such as the user or the appliance 2 to be managed. Also, if the authentication is "success," it means that the authenticity of the target of authentication has been verified. In this embodiment, identification information of a verified (i.e., authentic or authorized) user or appliance 2 has been registered in advance with the processing unit 13. Thus, the processing unit 13 determines, by collating the identification information of the user or appliance 2 as the target of authentication with the registered identification information, whether the authentication is success or not. Specifically, when finding that the identification information (such as an MAC address) of the appliance 2 connected to the electrical equipment 1A agrees with the preregistered identification information, the authentication of this appliance 2 is success. Otherwise, the authentication is failure.

Then, the processing unit 13 performs the information processing only when the authentication is success and performs no information processing when the authentication has failed. This makes it easier to avoid, even if the electrical equipment 1A is accessed by an unauthorized user or appliance 2, for example, leakage of information concerning the information processing by the processing unit 13 or unauthorized control and monitoring of the appliance 2. For example, even if an unauthorized user, who is not the resident of the facility F1, attempts in the facility F2 that is an office to access the appliance 2 in the facility F1, the unauthorized access may be rejected by authentication using the electrical equipment 1A.

More specifically, in this embodiment, a blockchain that is the distributed ledger technology is used for authentication purposes. That is to say, the processing unit 13 functions as each of a plurality of nodes of the blockchain and records, as transaction data D3, authentication data used for authentication purposes. In other words, the respective processing units 13 of the multiple pieces of electrical equipment 1A serve as nodes of the blockchain and process the same transaction data D3. In this embodiment, each processing unit 13 records the transaction data D3 by storing the transaction data D3 in the storage unit 14. The transaction data D3 is authentication data used for authentication purposes and specifically includes, for example, identification information of the target of authentication.

As can be seen, the appliance management system 10A according to this embodiment may reduce the risk of the authentication data being altered by adopting authentication using the blockchain. Consequently, this makes it easier to avoid unauthorized access even when a highly functional appliance 2 is provided broadly by using the power distribution equipment (electrical equipment 1) as a power infrastructure.

Optionally, in a variation of the second embodiment, the means for authentication may be implemented as any scheme other than the blockchain.

Note that the various configurations (including variations) that have been described for the second embodiment may be adopted as appropriate in combination with the various configurations (including variations) that have been described for the first embodiment.

### (Third embodiment)

Electrical equipment 1 according to this embodiment uses a quantum computer, which is a major difference from the electrical equipment 1 according to the first embodiment. In the following description, any constituent element of this third embodiment, having the same function as a counterpart of the first embodiment described above, will be designated by the same reference numeral as that counterpart's, and description thereof will be omitted herein as appropriate.

In this embodiment, the processing unit 13 is implemented as a quantum computer. That is to say, in this embodiment, the processing unit 13 is not a von Neumann computer but a quantum computer. In addition, in this embodiment, the quantum computer performs not only the function of the processing unit 13 but also at least the function of the execution unit 12 as well. In other words, the execution unit 12 and the processing unit 13 are implemented as a quantum computer.

The quantum computer performs the respective functions of the execution unit 12 and the processing unit 13 by executing a program (such as a quantum programming language). The program may be installed in advance in the quantum computer, distributed after having been recorded in a non-transitory storage medium such as a memory card, or downloaded through a telecommunications line. In other words, the program is designed to make one or more processors perform the functions of the execution unit 12 and the processing unit 13.

In this embodiment, the quantum computer has a size equal to or less than 0.9 mm³. This quantum computer is housed (built) in the housing 17 and thereby held by the housing 17. This allows the electrical equipment 1 according to this embodiment to reduce the area and volume occupied by the execution unit 12 and the processing unit 13 no less significantly than the processor 100 of the electrical equipment 1 according to the first embodiment.

Also, in this embodiment, the quantum computer contains at least 54 quantum bits. This contributes to increasing the processing speed of the processing unit 13.

The electrical equipment 1 according to this embodiment uses a quantum computer as the processing unit 13, thus making it easier to have complicated computations, such as the ones that use the learned model D2, done at higher speeds.

In a variation of the third embodiment, the quantum computer may function as only the processing unit 13. In that case, the execution unit 12 is provided separately from the processing unit 13.

Note that the various configurations (including variations) that have been described for the third embodiment may be adopted as appropriate in combination with the various configurations (including variations) that have been described for the first or second embodiment.

### (Recapitulation)

As can be seen from the foregoing description, electrical equipment (1, 1A) according to a first aspect includes a housing (17) and serves as power distribution equipment provided on a power supply channel. The electrical equipment (1, 1A) further includes an execution unit (12) and a processing unit (13). The execution unit (12) controls and/or monitors an appliance (2) to be electrically connected to the electrical equipment (1, 1A). The processing unit (13) performs information processing related to the appliance (2). The execution unit (12) and the processing unit (13) are held by the housing (17). The execution unit (12) controls and/or monitors the appliance (2) based on a result of the information processing performed by the processing unit (13).

This aspect allows electrical equipment (1, 1A) serving as power distribution equipment to manage (i.e., control and/or monitor) an appliance (2). In addition, information processing required to manage the appliance (2) is also performed by the electrical equipment (1, 1A) serving as power distribution equipment. This enables managing the appliance (2) even without involving communication between an external system such as a cloud computing system and the appliance (2). Consequently, this achieves the advantage of reducing the chances of causing inconveniences depending on the communication environment. For example, this may reduce the chances of the communication causing latency in controlling and/or monitoring the appliance (2) and/or a communication failure preventing the appliance (2) from being controller or monitored.

Electrical equipment (1, 1A) according to a second aspect, which may be implemented in conjunction with the first aspect, further includes a communications unit (first communications unit 11) held by the housing (17) and ready to communicate with a high-order system (3).

This aspect allows the electrical equipment (1, 1A) to communicate with the high-order system (3).

In electrical equipment (1, 1A) according to a third aspect, which may be implemented in conjunction with the second aspect, the communications unit (first communications unit 11) receives, from the high-order system (3), a learned model (D2) generated by the high-order system (3) through machine learning. The processing unit (13) performs the information processing by using the learned model (D2).

This aspect allows the execution unit (12) to control or monitor the appliance (2) in a complicated manner by making the processing unit (13) perform information processing using the learned model (D2).

In electrical equipment (1, 1A) according to a fourth aspect, which may be implemented in conjunction with the third aspect, the communications unit (first communications unit 11) transmits, to the high-order system (3), learning data (D1) to be used by the high-order system (3) for the purpose of the machine learning.

This aspect enables generating the learned model (D2) based on the learning data (D1) collected from the electrical equipment (1, 1A).

In electrical equipment (1, 1A) according to a fifth aspect, which may be implemented in conjunction with any one of the second to fourth aspects, the communications unit (first communications unit 11) receives, from the high-order system (3), a control instruction instructing that the appliance (2) be controlled. The execution unit (12) controls the appliance (2) in accordance with the control instruction.

This aspect enables remote-controlling the appliance (2).

In electrical equipment (1, 1A) according to a sixth aspect, which may be implemented in conjunction with any one of the first to fifth aspects, the processing unit (13) has a function of authentication and performs the information processing when the authentication is success.

This aspect makes it easier to avoid, even when the electrical equipment (1, 1A) is accessed by, for example, an unauthorized user or appliance (2), leakage of information concerning the information processing to be performed by the processing unit (13) and unauthorized control and monitoring of the appliance (2).

In electrical equipment (1, 1A) according to a seventh aspect, which may be implemented in conjunction with the sixth aspect, the processing unit (13) functions, in a blockchain having a plurality of nodes, as one of the plurality of nodes, and stores, as transaction data (D3), authentication data for use in the authentication.

This aspect may reduce the risk of the authentication data being altered.

In electrical equipment (1, 1A) according to an eighth aspect, which may be implemented in conjunction with any one of the first to seventh aspects, the housing (17) has dimensions defined by a standard for the power distribution equipment.

This aspect makes the electrical equipment (1, 1A) usable in a broad variety of applications.

In electrical equipment (1, 1A) according to a ninth aspect, which may be implemented in conjunction with any one of the first to eighth aspects, the processing unit (13) is implemented as a processor of a chip size equal to or smaller than a virtual square, each side of which has a length of 300 µm.

This aspect may reduce the area and volume occupied by the processing unit (13).

In electrical equipment (1, 1A) according to a tenth aspect, which may be implemented in conjunction with any one of the first to eighth aspects, the processing unit (13) is implemented as a processor of a chip size equal to or smaller than a virtual square, each side of which has a length of 100 µm.

This aspect may further reduce the area and volume occupied by the processing unit (13).

In electrical equipment (1, 1A) according to an eleventh aspect, which may be implemented in conjunction with any one of the first to tenth aspects, the processing unit (13) is implemented as a quantum computer.

This aspect makes it easier to have complicated computations done at high speeds by the processing unit (13).

In electrical equipment (1, 1A) according to a twelfth aspect, which may be implemented in conjunction with the eleventh aspect, the quantum computer has a size equal to or less than 0.9 mm³.

This aspect may reduce the area and volume occupied by the processing unit (13).

In electrical equipment (1, 1A) according to a thirteenth aspect, which may be implemented in conjunction with the eleventh or twelfth aspect, the quantum computer contains at least 54 quantum bits.

This aspect contributes to increasing the processing speed of the processing unit (13).

An appliance management system (10, 10A) according to a fourteenth aspect includes multiple pieces of the electrical equipment (1, 1A) according to any one of the first to thirteenth aspects. Each of the multiple pieces of the electrical equipment (1, 1A) further includes a cooperating communications unit (16) held by the housing (17). The respective cooperating communications units (16) of the multiple pieces of the electrical equipment (1, 1A) may communicate with each other.

This aspect achieves the advantage of reducing the chances of causing inconveniences depending on the communication environment. Specifically, this may reduce the chances of the communication causing latency in controlling and/or monitoring the appliance (2) and/or a communication failure preventing the appliance (2) from being controller or monitored.

An appliance management method according to a fifteenth aspect uses power distribution equipment (electrical equipment 1, 1A) provided on a power supply channel. The appliance management method includes an execution step and a processing step. The execution step includes making the power distribution equipment (electrical equipment 1, 1A) control and/or monitor an appliance (2) to be electrically connected to the power distribution equipment (electrical equipment 1, 1A). The processing step includes making the power distribution equipment (electrical equipment 1, 1A) perform information processing related to the appliance (2). The execution step includes controlling and/or monitoring the appliance (2) based on a result of the information processing in the processing step.

This aspect achieves the advantage of reducing the chances of causing inconveniences depending on the communication environment. For example, this may reduce the chances of the communication causing latency in controlling and/or monitoring the appliance (2) and/or a communication failure preventing the appliance (2) from being controller or monitored.

A program according to a sixteenth aspect is designed to cause one or more processors to perform the appliance management method according to the fifteenth aspect.

This aspect achieves the advantage of reducing the chances of causing inconveniences depending on the communication environment. For example, this may reduce the chances of the communication causing latency in controlling and/or monitoring the appliance (2) and/or a communication failure preventing the appliance (2) from being controlled or monitored.

Note that these are not the only aspects of the present disclosure. Rather, various constituent elements (including variations) of the electrical equipment (1, 1A) according to the second and third exemplary embodiments described above may also be implemented as an appliance management system (10, 10A), an appliance management method, or a program.

Note that the constituent elements according to the second to thirteenth aspects are not essential constituent elements for the electrical equipment (1, 1A) but may be omitted as appropriate.

### Reference Signs List

- 1, 1A: Electrical Equipment (Power Distribution Equipment)
- 2: Appliance
- 3: High-Order System
- 10, 10A: Appliance Management System
- 11: First Communications Unit (Communications Unit)
- 12: Execution Unit
- 13: Processing Unit
- 16: Cooperating Communications Unit
- 17: Housing
- D1: Learning Data
- D2: Learned Model
- D3: Transaction Data

## Claims

1. Electrical equipment comprising a housing and serving as power distribution equipment provided on a power supply channel, the electrical equipment further comprising:
an execution unit configured to control and/or monitor an appliance to be electrically connected to the electrical equipment; and
a processing unit configured to perform information processing related to the appliance,
the execution unit and the processing unit being held by the housing,
the execution unit being configured to control and/or monitor the appliance based on a result of the information processing performed by the processing unit.

2. The electrical equipment of claim 1, further comprising a communications unit held by the housing and configured to be ready to communicate with a high-order system.

3. The electrical equipment of claim 2, wherein
the communications unit is configured to receive, from the high-order system, a learned model generated by the high-order system through machine learning, and
the processing unit is configured to perform the information processing by using the learned model.

4. The electrical equipment of claim 3, wherein
the communications unit is configured to transmit, to the high-order system, learning data to be used by the high-order system for a purpose of the machine learning.

5. The electrical equipment of any one of claims 2 to 4, wherein
the communications unit is configured to receive, from the high-order system, a control instruction instructing that the appliance be controlled, and
the execution unit is configured to control the appliance in accordance with the control instruction.

6. The electrical equipment of any one of claims 1 to 5, wherein
the processing unit has a function of authentication, and
the processing unit is configured to perform the information processing when the authentication is success.

7. The electrical equipment of claim 6, wherein
the processing unit is configured to function, in a blockchain having a plurality of nodes, as one of the plurality of nodes, and also configured to store, as transaction data, authentication data for use in the authentication.

8. The electrical equipment of any one of claims 1 to 7, wherein
the housing has dimensions defined by a standard for the power distribution equipment.

9. The electrical equipment of any one of claims 1 to 8, wherein
the processing unit is implemented as a processor of a chip size equal to or smaller than a virtual square, each side of which has a length of 300 µm.

10. The electrical equipment of any one of claims 1 to 8, wherein
the processing unit is implemented as a processor of a chip size equal to or smaller than a virtual square, each side of which has a length of 100 µm.

11. The electrical equipment of any one of claims 1 to 10, wherein
the processing unit is implemented as a quantum computer.

12. The electrical equipment of claim 11, wherein
the quantum computer has a size equal to or less than 0.9 mm³.

13. The electrical equipment of claim 11 or 12, wherein
the quantum computer contains at least 54 quantum bits.

14. An appliance management system comprising multiple pieces of the electrical equipment of any one of claims 1 to 13,
each of the multiple pieces of the electrical equipment further including a cooperating communications unit held by the housing, the respective cooperating communications units of the multiple pieces of the electrical equipment being configured to communicate with each other.

15. An appliance management method using power distribution equipment provided on a power supply channel, the appliance management method comprising:
an execution step including making the power distribution equipment control and/or monitor an appliance to be electrically connected to the power distribution equipment; and
a processing step including making the power distribution equipment perform information processing related to the appliance,
the execution step including controlling and/or monitoring the appliance based on a result of the information processing in the processing step.

16. A program designed to cause one or more processors to perform the appliance management method of claim 15.
